# EUROPÄISCHE PATENTSCHRIFT

(11) **EP 2 117 691 B1**
(45) Veröffentlichungstag und Bekanntmachung des Hinweises auf die Patenterteilung: **22.09.2010**
(21) Anmeldenummer: 08716168.3
(22) Anmeldetag: 03.03.2008
(51) Int. Cl.: B01F 11/00, B04B 5/04, B04B 9/14, G01N 35/04, B01F 3/08

(54) **MEHRPLATZMISCHVORRICHTUNG ZUM MISCHEN VON LABORGEFÄSSINHALTEN**
MULTISTATION DEVICE FOR MIXING THE CONTENTS OF LABORATORY VESSELS
DISPOSITIF MULTIPOSTE POUR MÉLANGER DES CONTENUS DE RÉCIPIENTS DE LABORATOIRE

(30) Priorität: 02.03.2007 DE 102007010616
(43) Veröffentlichungstag der Anmeldung: 18.11.2009
(73) Patentinhaber: EPPENDORF AG, 22339 Hamburg (DE)
(72) Erfinder: EBERS, Manfred, 25474 Bönningstedt (DE); PETERSEN, Bernd, 23845 Itzstadt (DE)
(74) Vertreter: Rohnke, Christian
(86) Internationale Anmeldenummer: PCT/EP2008/001646
(87) Internationale Veröffentlichungsnummer: WO 2008/107139

(56) Entgegenhaltungen:
- EP-A- 1 201 297
- EP-A- 1 832 335
- EP-A- 1 832 336
- DE-A1- 10 038 060
- DE-U1- 20 218 573
- DE-U1-202006 001 514
- US-A- 3 310 292

## Beschreibung

Die vorliegende Erfindung betrifft eine Vorrichtung zum Mischen insbesondere von Laborgefäß-Inhalten mit mindestens zwei Aufnahmeadaptern jeweils mit einer Halterung zum Aufnehmen von Gefäßen, insbesondere von Laborgefäßen in Wechselblöcken, und mit einem Antrieb, durch den sich jeder der Aufnahmeadapter mit derselben Winkelgeschwindigkeit in eine Mischbewegung versetzen lässt, die in einer horizontalen Ebene kreisförmig translatorisch oszillierend verläuft.

Mischvorrichtungen, in denen Gefäßinhalte vermengt werden, sind hinlänglich bekannt. Insbesondere für Labore gibt es Mischer, die auch kleine Flüssigkeitsmengen dadurch mischen können, dass kleine Behälter in geeigneten Haltern, so genannten "Wechselblöcken" auch in sehr großen Gruppen zwei-, drei- oder sogar vierstelliger Anzahl zusammengefasst sind. Solche Wechselblöcke und auch die Reaktionsgefäße können genormt sein. So gibt es zum Beispiel Reaktionsgefäße mit 0,2 ml, 0,5 ml, 1,5 ml und 2,0 ml Inhalt - sowie jeweils geeignete Wechselblöcke standarisiert dazu. Ferner gibt es zum Beispiel Wechselblöcke für Cryo-Gefäße, für Falcon-Gefäße (1,5 ml und 50 ml), für Glasgefäße und Bechergläser, für Microtiterplatten (MTP), für Deep Well Platten (DWP), für Slides und für PCR-Platten mit 96 Wells. Diese Aufzählung ist nicht abschließend, deutet aber an, in welcher großen Vielfalt Laborgefäße existieren, für die die Mischer geeignet sein sollten. Zu diesem Zweck gibt es Standards und Normierungen der so genannten "Foot Prints" - nämlich der Sockelstruktur von Wechselblöcken.

Weit diese Wechselblöcke prinzipiell so aufgebaut sind, dass die Einzelgefäße von oben dort hinein gesteckt werden, hat sich für die bekannten Mischer eine kreisförmig translatorisch oszillierende Mischbewegung etabliert, die im wesentlichen in einer horizontalen Ebene abläuft. Zu diesem Zweck ist bei den bekannten Mischern in aller Regel ein elektromotorischer Unwuchtantrieb dafür zuständig, einen "Tisch" in diese kreisförmige Bewegung zu versetzen. Letzterer ist dazu in bekanntlich unterschiedlicher Weise gelagert: Bekannt ist zum Beispiel eine Lagerung in Linear-Wälzlagern (so genannten Kugelbüchsen) in den beiden horizontalen Richtungen. Bekannt ist aber auch eine Filmscharnierlagerung. Alternativ gibt es auch elektromagnetische Lagerung oder Lagerung mit Piezo-Elementen, die jeweils auch gleich als Antrieb dienen können.

In der EP 1201297 A1 ist ein Schüttelgerät für Probengefäße, insbesondere auch für Microtiterplatten, offenbart, das je Probengefäßträgertisch mindestens einen eigenen elektromagnetischen Antrieb aufweist.

Üblicherweise werden solche Mischer mit einer Drehfrequenz von 200 U/min bis 1.500 U/min angetrieben. Abhängig von der für das Mischgut erforderlichen Mischung, aber auch von misch-mechanischen Parametern ist die Frequenz der Mischbewegung bekanntlich einstellbar.

Insbesondere im Großlabor-Betrieb hat es sich als nützlich erwiesen, so genannte Mehrplatz-Mischer aufzustellen. So offenbart beispielsweise das US-Patent 5,372,425 ein mehrstöckiges Schüttelgerät für Probengefäße. Insbesondere für Wechselblöcke sind diese geeignet, mittels mehrerer Aufnahmeadapter gleichzeitig mehrere Wechselblöcke zum Mischen von Laborgefäßen aufzunehmen, und so gleichzeitig eine größere Anzahl von Laborgefäßen mit einer Mischbewegung zu beaufschlagen. Ein Schüttelgerät mit einem Antrieb für eine einzige Mischplatte, die vier Träger für Gefäße aufnehmen kann, wird in der US-Schrift 3,310292 offenbart. Hingegen weist das Schüttelgerät aus der EP 1201297 A1 in einer Ausführungsform mehrere Gefäßträgertische mit je einem Antrieb auf.

Aus der beschriebenen kreisförmigen Mischbewegung ergibt sich physikalisch das Problem von Unwucht. Dies wird bekanntlich durch einen geeignet platziertes Gegengewicht gelöst, das mit dem drehangetriebenen Aufnahmeadapter in Verbindung steht und sich zum Kompensieren der Unwucht mitdreht. Schon bei einem Einplatz-Mischer bedeutet ein solches Gegengewicht ein zusätzliches Bauteil, welches außerdem bei der Montage justiert werden muss und welches ferner das Gewicht der Gesamtvorrichtung vergrößert. Bei Mehrplatz-Mischem vervielfacht sich dieses Problem sozusagen mit der Anzahl der Aufnahmeadapter der Mehrplatz-Mischvorrichtung.

Der vorliegenden Erfindung liegt demgegenüber die Aufgabe zugrunde, eine Mehrplatz-Mischvorrichtung zu schaffen, die Unwucht-kompensiert ist und dabei leichter und energiesparender ist und aus weniger Teilen besteht.

Diese Aufgabe wird von einer Vorrichtung zum Mischen mit den Merkmalen des Anspruchs 1 gelöst. Bevorzugte Ausgestaltungen sind in den Unteransprüchen angegeben.

Erfindungsgemäß ist eine Mischvorrichtung insbesondere für Laborgefäß-Inhalte mit einem Aufnahmeadapter und einem Antrieb versehen. Der Aufnahmeadapter weist eine Halterung auf, die geeignet ist, Gefäße aufzunehmen. Dies soll vorzugsweise heißen, dass die Gefäße sich in die Halterung des Aufnahmeadapters so einbringen lassen, dass sie sich während der Mischbewegung, in die der Aufnahmeadapter sich mittels des Antriebs versetzen lässt, in ungestörtem Betrieb nicht von allein befreien. Insbesondere für Laborgefäße in Wechselblöcken genügt die Halterung des Aufnahmeadapters vorzugsweise bestimmten Standards insbesondere bezüglich der Anschlussmaße.

Der Antrieb der erfindungsgemäßen Mischvorrichtung ist in der Lage, den Aufnahmeadapter in eine Mischbewegung zu versetzen, die kreisförmig translatorisch oszillierend in einer Ebene verläuft. "Kreisförmig translatorisch oszillierend" kann mit anderen Worten dadurch beschrieben werden, dass bei einer solchen erfindungsgemäßen Mischbewegung jeder Punkt des Aufnahmeadapters eine Kreisbewegung mit gleichem Radius, gleicher Winkelgeschwindigkeit und gleicher Winkelposition um einen jeweiligen Mittelpunkt in planparallelen Ebenen ausführt. Die Mischbewegung verläuft in horizontalen Ebenen - so dass in den Aufnahmeadaptern aufgenommene Wechsel blöcke mit in ihnen aufgenommen senkrecht stehenden Reaktionsgefäßen betriebssicher gemischt werden.

Die erfindungsgemäße Vorrichtung ist gekennzeichnet durch Aufnahmeadapter, deren Ausgangslage, aus der sie die kreisförmig,translatorisch oszillierende Mischbewegung mit gleicher Winkelgeschwindigkeit beginnen, um ihre jeweiligen Drehmittelpunkte gegeneinander verdreht ist- insbesondere so dass sich im Betrieb die durch ihre jeweilige kreisförmige Mischbewegung erzeugten Unwuchten mindestens teilweise kompensieren.

"Gegeneinander verdreht" soll dabei heißen, dass die Ausgangslage eines Aufnahmeadapters zu Beginn der kreisförmigen Mischbewegung um den bestimmten Winkelbetrag von der Ausgangslage eines anderen Aufnahmeadapters um die jeweiligen Drehmittelpunkte der Mischbewegung abweicht.

Zu diesem Zweck treibt der Antrieb der Mischvorrichtung die Aufnahmeadapter besonders bevorzugt in der der selben Drehrichtung an.

Bevorzugt sind außerdem die Aufnahmeadapter in der Draufsicht auf die erfindungsgemäße Vorrichtung spiegelsymmetrisch und/oder gleichmäßig auf einem gedachten Kreis angeordnet. Zum Beispiel sind vier Aufnahmeadapter nicht nur bezüglich einer Symmetrielinie spiegelsymmetrisch, sondern bezüglich einer zweiten (zu der ersten Symmetrielinie rechtwinkligen). Oder zum Beispiel drei Aufnahmeadapterbilden so vorzugsweise ein gleichseitiges Dreieck - die Aufnahmeadapter sind dann bezüglich dreier Symmetrielinien, die um 120° zueinander liegen, spiegelsymmetrisch und sind gleichmäßig auf einem gedachten Kreis angeordnet. Die vier Aufnahmeadapter können auf den Ecken eines gedachten Rechtecks zueinander angeordnet sein - also wie gesagt bezüglich zwei Symmetrielinien, die zueinander rechtwinklig sind, spiegelsymmetrisch zueinander. Möglich ist hier auch eine quadratische Anordnung der vier Aufnahmeadapter - so dass die Aufnahmeadapter (wie auch bei den drei Aufnahmeadaptern, deren Drehachsen zu einem gleichseitigen Dreieck angeordnet sind) gleichmäßig auf einem gedachten Kreis angeordnet sind. Als weiteres Beispiel seien sechs Aufnahmeadapter genannt, die ein gleichmäßiges Sechseck bilden können.

Zum Beispiel in der eben beschriebenen Weise auf der Mischvorrichtung angeordnet, ist die Ausgangslage der Aufnahmeadapter (aus der sie die Mischbewegung mit gleicher Winkelgeschwindigkeit beginnen) um ihre jeweiligen Drehmittelpunkte gegeneinander um einen Winkelbetrag verdreht, welcher sich vorzugsweise aus 360° geteilt durch die Gesamtanzahl der Aufnahmeadapter errechnet. Zum Beispiel vier Aufnahmeadapter sind folglich um 90° gegeneinander verdreht, drei Aufnahmeadapter um 120° und sechs Aufnahmeadapter um 60°. "Gegeneinander verdreht" soll dabei - um es nochmals zu betonen - heißen, dass die Ausgangslage eines Aufnahmeadapters zu Beginn der kreisförmigen Mischbewegung um den bestimmten Winkelbetrag von der Ausgangslage eines anderen Aufnahmeadapters um die jeweiligen Drehmittelpunkte abweicht.

Besonders bevorzugt ist ferner insbesondere bei den wie beschrieben angeordneten Aufnahmeadaptern, dass die Ausgangslagen der diametral zueinander angeordneten Aufnahmeadapter gegeneinander um 180° verdreht sind. Zum Beispiel bei sechs Aufnahmeadaptern, die etwa auf einem Rechteck angeordnet sind (vier auf den Ecken des Rechtecks und zwei jeweils auf der Mitte einer der Längsseiten des Rechtecks), sind die beiden Aufnahmeadapter-Paare, die einander auf den Ecken diagonal gegenüberliegen, um 180° zueinander verdreht, ebenso wie das Aufnahmeadapter-Paar, das einander auf der Mitte der Längsseiten des Rechtecks gegenüberliegt. Die Ausgangslage von einem zum anderen Paar ist dann wiederum vorzugsweise um 60° unterschiedlich.

Insgesamt sei darauf hingewiesen, dass die erfindungsgemäß bewerkstelligte Unwucht-Kompensation schon deshalb nicht physikalisch ideal funktionieren kann, weil die Aufnahmeadapter unterschiedlich schwer beladen sein können. Es ist daher erfindungsgemäß schon vorteilhaft, dass sich die Unwuchten erfindungsgemäß mindestens teilweise kompensieren und/oder mindestens drehphasenweise vermindert sind.

Weitere Vorteile und Merkmale der vorliegenden Erfindung werden im Folgenden mit Bezug auf die beigefügten Zeichnungen, die ein Ausführungsbeispiel der Erfindung darstellen, beschrieben.
- **Figur 1**: zeigt eine räumliche Ansicht einer erfindungsgemäßen Vorrichtung zum Mischen mit vier Aufnahmeadaptern,
- **Figur 2**: zeigt eine schematische Draufsicht auf die vier Aufnahmeadapter der Vorrichtung gemäß Figur 1 und
- **Figur 3**: zeigt eine Draufsicht auf den Antrieb und die Lagerung der vier Aufnah- meadapter der Vorrichtung gemäß Figur 1 ohne die erfindungsgemäße Verdrehung in Richtung der Mischbewegung,
- **Figur 4**: zeigt eine schematische Draufsicht auf einen der vier Aufnahmeadapter gemäß Figur 2 zum Darstellen der kreisförmig translatorisch oszillieren- den Mischbewegung und
- **Figur 5**: zeigt eine schematische Draufsicht auf einen der vier Aufnahmeadapter gemäß Figur 2 zum Darstellen der erfindungsgemäßen Verdrehung der Ausgangslage in Richtung der Mischbewegung.

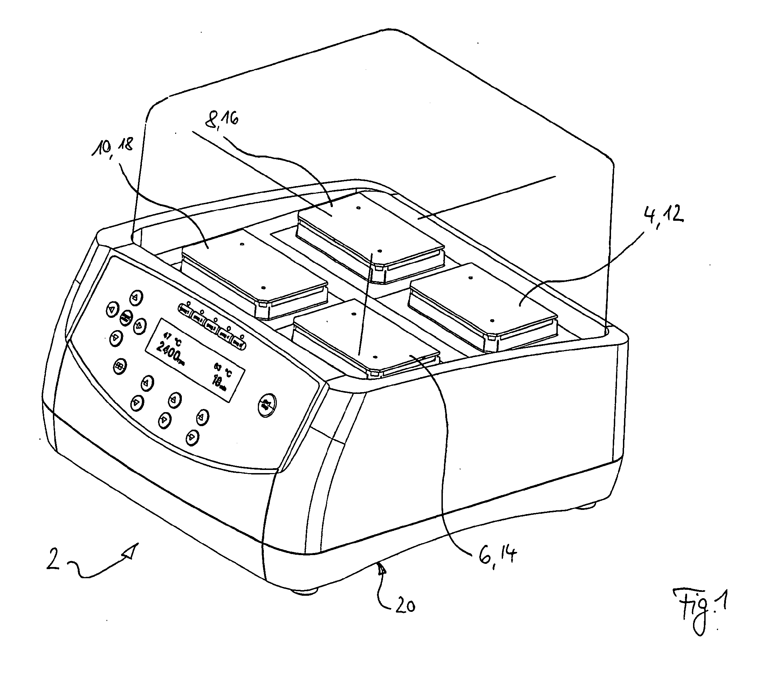

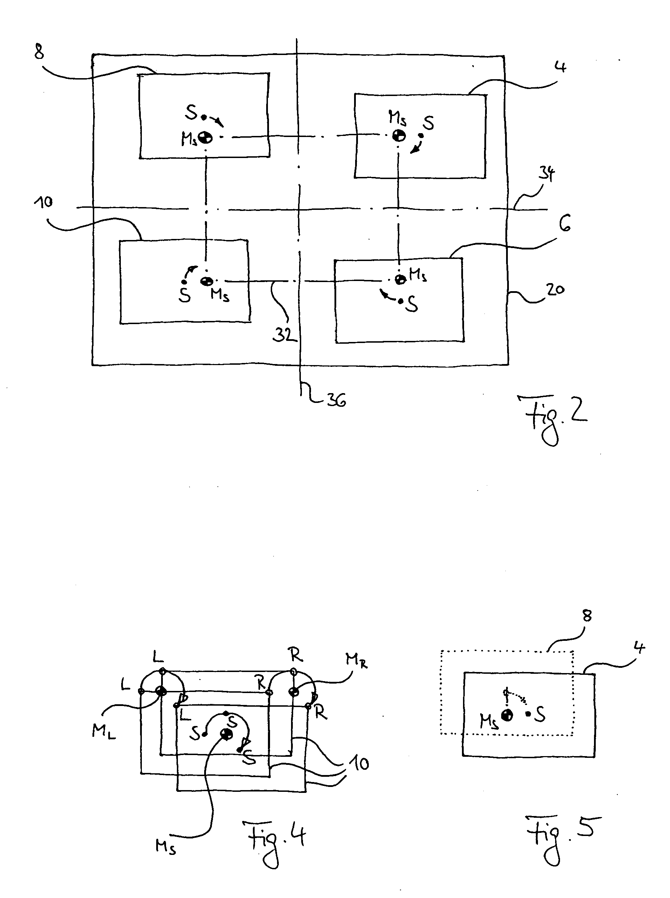

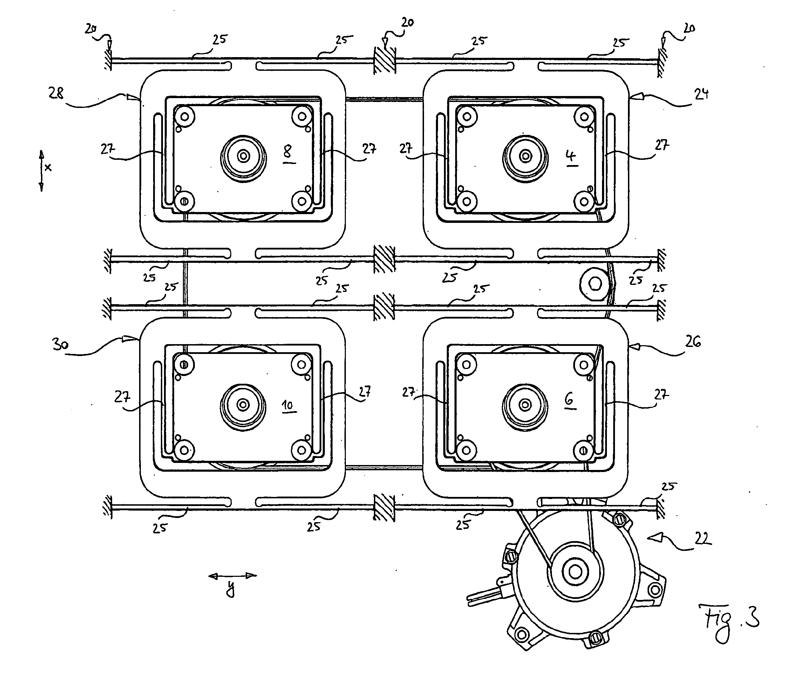

In **Figur 1** ist eine Mischvorrichtung **2** erkennbar mit vier oberseitigen, rahmenförmigen Aufnahmeadaptern **4, 6, 8** und **10,** die jeweils eine Halterung zum Aufnehmen von Wechselblöcken **12, 14, 16** und **18** aufweist. Durch einen Antrieb innerhalb eines Gehäuses **20** der Mischvorrichtung **2** lässt sich jeder der Aufnahmeadapter in eine Mischbewegung versetzen, die mit derselben Winkelgeschwindigkeit jedes Aufnahmeadapters **4, 6, 8** und **10** so verläuft, dass in einer horizontalen Ebene jeder Punkt eines jeweiligen Aufnahmeadapters eine Kreisbewegung mit gleichem Radius, gleicher Winkelgeschwindigkeit und gleicher Winkelposition um einen jeweiligen Mittelpunkt ausführt (kreisförmig translatorisch oszillierende Mischbewegung). Der dafür in der Mischvorrichtung **2** vorgesehene Antrieb **22** samt Lagerung **24, 26, 28** und **30** der Aufnahmeadapter **4, 6, 8** und **10** ist in **Figur 3** abgebildet, und eine schematische Darstellung der kreisförmig translatorisch oszillierenden Mischbewegung geht aus **Figur 4** hervor. Zunächst zu Figur **4****:** Bei der kreisförmig translatorisch oszillierenden Mischbewegung (jeder der Aufnahmeadapter **4, 6, 8** und **10** der Mischvorrichtung **2;** beispielhaft ist Aufnahmeadapter **10** dargestellt) bewegt sich, wie in Figur 4 erkennbar, jeder Punkt des Aufnahmeadapters (herausgehoben sind beispielhaft der obere linke Eckpunkt **L** und rechte Eckpunkt **R** sowie der Schwerpunkt **S** des Aufnahmeadapters) in horizontaler Ebene (Zeichnungsebene von Figur 4) auf einer Kreisbahn (dargestellt durch die drei Pfeile mit kreisförmigem Verlauf) mit gleichem Radius, gleicher Winkelgeschwindigkeit und gleicher Winkelposition um einen jeweiligen Mittelpunkt **M_{L}, M_{R}** und **M_{S}**.

In **Figur 3** nun ist als Draufsicht der innere Aufbau des Antriebs **22** der Vorrichtung **2** zum Mischen gemäß Figur 1 erkennbar (ohne die erfindungsgemäße Verdrehung der Ausgangslage der Aufnahmeadapter in Richtung der Mischbewegung). Insbesondere ist deutlich erkennbar, wie die Lagerungen **24, 26, 28** und **30** und der Antrieb **22** die eben beschriebende Mischbewegung der Aufnahmeadapter **4, 6, 8** und **10** gegenüber der übrigen Vorrichtung **20** ermöglicht (an der auch der Antriebsmotor **18** für diese Mischbewegung befestigt ist): denn jeder der Aufnahmeadapter **4, 6, 8** und **10** ist durch die Lagerungen **24, 26, 28** und **30** mittels jeweils einer Filmscharnieranordnung **25** mit Freiheitsgrad in Richtung **x** und einer Filmscharnieranordnung **27** mit Freiheitsgrad in Richtung **y** gegenüber der übrigen Vorrichtung gelagert. Dies ermöglicht, dass der Riemenantrieb **22** die Aufnahmeadapter **4, 6, 8** und **10** in die kreisförmig translatorisch oszillierende Mischbewegung gemäß Figur 4 in horizontaler Ebene (die Zeichnungsebene von Figur 2 bis 5) versetzt, während die Filmscharnier-Lagerungen eine Bewegung aus der horizontalen Ebene heraus im wesentlichen nicht zulassen.

In der schematischen Draufsicht nun gemäß **Figur 2** ist erkennbar, dass die vier Aufnahmeadapter **4** bis **10** sich in die selbe Richtung drehen (die kleinen Pfeile an den Schwerpunkten **S** der Aufnahmeadapter) deuten die jeweils bevorstehende Drehbewegung an). Ferner ist erkennbar, dass die Mittelpunkte **M_{S}** der Drehbewegung der Schwerpunkte der Aufnahmeadapter **4** bis **10** auf den Eckpunkten eines gedachten Rechtecks **32** angeordnet sind. Da der Abstand der Aufnahmeadapter **4** bis **10** sich in der Größenordnung von Dezimetern bemisst, während der Radius der Drehbewegung sich eher in der Größenordnung von Millimetern abspielt (im Verhältnis zueinander real also anders als in Figur 3 schematisch übertrieben dargestellt), kann diese Anordnung der Aufnahmeadapter **4** bis **10** erfindungsgemäß bevorzugt als "in der Draufsicht im wesentlichen spiegelsymmetrisch" bezeichnet werden - nämlich bezüglich der rechtwinklig zueinander verlaufenden Symmetrielinien **34, 36.**

Außerdem ist schließlich erkennbar, dass die Ausgangslage der vier Aufnahmeadapter **4** bis **10** "gegeneinander verdreht" ist: die Aufnahmeadapter starten ihre (durch die kleinen Pfeile an den Schwerpunkten **S** angedeutete) Mischbewegung aus einer um jeweils 90° zueinander verdrehten Ausgangslage. - also entsprechend der erfindungsgemäß bevorzugten Rechnung, 360° durch die Gesamtanzahl der Aufnahmeadapter zu teilen. Dabei sind die Schwerpunkte **S** der diametral einander gegenüberliegenden Aufnahmeadapter **4, 10** um 180° zueinander verdreht ebenso wie die Schwerpunkte S der beiden anderen diametral einander gegenüberliegenden Aufnahmeadapter **6, 8,** wobei diese Aufnahmeadapter-Paare **4, 10** und **6, 8** wiederum - immer bezüglich ihrer jeweiligen Drehmittelpunkte **M_{S}** - um 90° zueinander verdreht sind.

Um das "verdreht sein gegeneinander um 90°" nochmals beispielhaft zu verdeutlichen, sei auf Figur 5 verwiesen: Die Ausgangslage des Aufnahmeadapters **8** ist gepunktet dargestellt, die des Aufnahmeadapters **4** durchgezogen. Erkennbar ist der (Schwerpunkt vom) Aufnahmeadapter **4** gegen den (Schwerpunkt vom) Aufnahmeadapter **8** (dargestellt um den Drehmittelpunkt **M_{S}** des Schwerpunkts) um 90° verdreht.

Die erfindungsgemäße Wirkung der Verminderung ungünstiger Umwucht ergibt sich also aus der kreisförmig translatorisch oszillierenden Mischbewegung in horizontaler Ebene (mechanisch im abgebildeten Beispiel also aus der Filmscharnierlagerung gemäß Figur 3 mit den resultierenden zwei translatorischen Freiheitsgraden jedes Aufnahmeadapters **4** bis **10** (in x- und y-Richtung der horizontalen Bewegungsebenen), in denen die Aufnahmeadapter **4** bis **10** durch den Riemenantrieb **22** (wie gemäß Figur 2 schematisch dargestellt) drehangetrieben sind) - zusammen mit der erfindungsgemäßen Verdrehung der Ausgangslage der Aufnahmeadapter im dargestellten Bespiel um 90° gegeneinander.

## Patentansprüche

1. Mehrplatz-Mischvorrichtung (2) zum Mischen insbesondere von Laborgefäß-Inhalten mit
- mindestens zwei Aufnahmeadaptern (4, 6, 8, 10) jeweils mit einer Halterung zum Aufnehmen von Gefäßen (12, 14, 16, 18), insbesondere Laborgefäßen insbesondere in Wechselblöcken,
- Lagerungen (24, 26, 28, 30) der Aufnahmeadapter, durch die jeder Aufnahmeadapter mit Freiheitsgrad in Richtung x und Freiheitsgrad in Richtung y gegenüber der übrigen Vorrichtung gelagert ist, und
- einem gemeinsamen Antrieb (22), durch den sich jeder der Aufnahmeadapter, in der Lagerung geführt, in eine Mischbewegung versetzen lässt, die mit derselben Winkelgeschwindigkeit so verläuft, dass in horizontalen Ebenen jeder Punkt des Aufnahmeadapters eine kreisförmig translatorisch oszillierende Mischbewegung mit gleichem Radius, gleicher Winkelgeschwindigkeit und gleicher Winkelposition um einen jeweiligen Mittelpunkt ausführt,
**dadurch gekennzeichnet,**
- **dass** eine Ausgangslage der Aufnahmeadapter, aus der sich die - Aufnahmeadapter mittels des Antriebs in die kreisförmig translatorisch oszillierende Mischbewegung versetzen lassen, in Richtung der Mischbewegung gegeneinander in ihrer jeweiligen Winkelposition um einen Winkelbetrag verdreht ist, so dass sich die Unwuchten während der Mischbewegung mindestens teilweise kompensieren.

2. Mischvorrichtung nach dem vorhergehenden Anspruch, **dadurch gekennzeichnet, dass** der Antrieb die Aufnahmeadapter in dieselbe Drehrichtung antreibt.

3. Mischvorrichtung nach einem der vorhergehenden Ansprüche, **dadurch gekennzeichnet, dass** die Aufnahmeadapter in der Draufsicht spiegelsymmetrisch und/oder gleichmäßig auf einem Kreis verteilt angeordnet sind.

4. Mischvorrichtung nach einem der vorhergehenden Ansprüche, **dadurch gekennzeichnet, dass** die Ausgangslage der mindestens zwei Aufnahmeadapter gegeneinander um einen Winkelbetrag verdreht ist, welcher sich aus 360° geteilt durch die Gesamtanzahl der Aufnahmeadapter errechnet.

5. Mischvorrichtung nach einem der vorhergehenden Ansprüche, **gekennzeichnet durch** eine gerade Anzahl Aufnahmeadapter sowie **dadurch**, dass die Ausgangslage von diametral zueinander angeordneten Aufnahmeadaptern gegeneinander um 180° verdreht ist.

## Claims

1. Multistation mixing device (2) for mixing the contents of laboratory vessels in particular, with
- at least two adapter plates (4, 6, 8, 10), each with a holder for receiving vessels (12, 14, 16, 18), in particular laboratory vessels, in particular in exchangeable thermoblocks,
- bearings (24, 26, 28, 30) for the adapter plates, by means of which each adapter plate is mounted with a degree of freedom in direction x and a degree of freedom in direction y relative to the rest of the device, and
- a common drive mechanism (22), by means of which each of the adapter plates, guided in the bearing, can be driven in a mixing movement that takes place with the same angular speed such that, in horizontal planes, each point of the adapter plate executes a circular translatory oscillating mixing movement with the same radius, the same angular speed and the same angular position about a respective midpoint,
**characterized in that**
- a starting position of the adapter plates, from which position the adapter plates can be driven by the drive mechanism in the circular translatory oscillating mixing movement, is rotated relative to one another by an angle in the direction of the mixing movement in its respective angular position, such that the imbalances during the mixing movement are at least partially compensated.

2. Mixing device according to the preceding claim, **characterized in that** the drive mechanism drives the adapter plates in the same direction of rotation.

3. Mixing device according to one of the preceding claims, **characterized in that** the adapter plates, seen in a plan view, are arranged mirror-symmetrically and/or uniformly on a circle.

4. Mixing device according to one of the preceding claims, **characterized in that** the starting positions of the at least two adapter plates are rotated relative to each other by an angle that is calculated from 360° divided by the total number of adapter plates.

5. Mixing device according to one of the preceding claims, **characterized by** an even number of adapter plates, and by the fact that the starting positions of diametrically arranged adapter plates are rotated relative to each other through 180°.

## Revendications

1. Dispositif mélangeur (2) à plusieurs emplacements pour mélanger notamment le contenu de cuves de laboratoire, comprenant
- au moins deux adaptateurs d'accueil (4, 6, 8, 10) munis chacun d'un élément de maintien pour accueillir des cuves (12, 14, 16, 18), notamment des cuves de laboratoire, notamment dans des blocs interchangeables,
- des supports (24, 26, 28, 30) de l'adaptateur d'accueil par le biais desquels chaque adaptateur d'accueil est supporté avec un degré de liberté dans la direction x et un degré de liberté dans la direction y par rapport au reste du dispositif et
- un mécanisme d'entraînement commun (22) par le biais duquel chacun des adaptateurs d'accueil, guidé dans le support, peut être amené dans un mouvement de mélange qui se déroule à la même vitesse angulaire, de sorte que dans des plans horizontaux, chaque point de l'adaptateur d'accueil exécute un mouvement de mélange oscillant translatoire circulaire avec le même rayon, la même vitesse angulaire et la même position angulaire autour d'un point central respectif,
**caractérisé en ce**
- **qu**'une position initiale de l'adaptateur d'accueil, à partir de laquelle l'adaptateur d'accueil peut être amené dans le mouvement de mélange oscillant translatoire circulaire au moyen du mécanisme d'entraînement, est pivotée dans la direction du mouvement de mélange réciproque dans sa position angulaire respective d'une valeur angulaire de manière à compenser au moins partiellement les déséquilibres pendant le mouvement de mélange.

2. Dispositif mélangeur selon la revendication précédente, **caractérisé en ce que** le mécanisme d'entraînement entraîne les adaptateurs d'accueil dans le même sens de rotation.

3. Dispositif mélangeur selon l'une des revendications précédentes, **caractérisé en ce que** les adaptateurs d'accueil, vus de dessus, sont disposés selon une symétrie en miroir et/ou distribués régulièrement sur un cercle.

4. Dispositif mélangeur selon l'une des revendications précédentes, **caractérisé en ce que** la position initiale des au moins deux adaptateurs d'accueil l'un par rapport à l'autre est pivotée d'une valeur angulaire qui est calculée à partir de 360° divisé par le nombre total d'adaptateurs d'accueil.

5. Dispositif mélangeur selon l'une des revendications précédentes, **caractérisé par** un nombre pair d'adaptateurs d'accueil et aussi en ce que la position initiale d'adaptateurs d'accueil diamétralement opposés l'un à l'autre est pivotée de 180° l'un par rapport à l'autre.
